# EUROPÄISCHE PATENTANMELDUNG

(11) **EP 1 964 751 A2**
(43) Veröffentlichungstag der Anmeldung: **03.09.2008**
(21) Anmeldenummer: 08003437.4
(22) Anmeldetag: 26.02.2008
(51) Int. Cl.: B62D 1/06

(54) **Verfahren zur Herstellung von Lenkrädern für Kraftfahrzeuge**

(30) Priorität: 01.03.2007 AT 3252007
(71) Anmelder: EYBL International AG, 3500 Krems (AT)
(72) Erfinder: Kostler, Ernst, 3542 Jaidhof (AT); Vielkind, Thomas, 3511 Oberfucha (AT)
(74) Vertreter: Puchberger, Peter

(57) **Zusammenfassung**

Die Erfindung betrifft ein Verfahren zur Herstellung von Lenkrädern für Kraftfahrzeuge, wobei auf die Oberfläche eines Lenkradrohlings zumindest abschnittweise ein Schichtmaterial (1) aufgebracht wird, und wobei das Schichtmaterial (1) zu Materialstreifen zugeschnitten und an der Innenseite mit einem Kleber beschichtet wird, mehrere Materialstreifen zu einem Streifenring vernäht werden, der Streifenring auf den Lenkradrohling aufgezogen und in eine Pressform eingelegt wird, die Pressform derart geschlossen wird, dass die Ränder der Materialstreifen in die Ausnehmungen (7) des Lenkradrohlings eingepresst werden und wobei nachfolgend der Kleber aktiviert wird.

## Beschreibung

Die Erfindung betrifft ein Verfahren zur Herstellung von Lenkrädern für Kraftfahrzeuge, wobei auf die Oberfläche eines Lenkradrohlings zumindest abschnittweise ein Schichtmaterial aufgebracht wird.

In bisher bekannten Herstellungsverfahren werden Lenkräder die zur hochwertigeren Ausgestaltung beispielsweise mit Leder bezogen werden derart gefertigt, dass ein vorab vernähter Lederstreifen auf einen zumeist mit Kunststoff geschäumten Lenkradrohling aufgezogen und dann händisch vernäht wird. Aus diesem Grund sind Lederlenkräder gegenüber reinen Kunststofflenkrädern wesentlich aufwendiger und teurer in der Fertigung. Insbesondere auch um die Kosten bei Rohstoffen wie Leder zu minimieren wird angestrebt, ein Lenkrad nur abschnittsweise, beispielsweise nur auf der fahrerzugewandten Sichtseite oder im Bereich des Außenumfangs des Lenkrades mit dem teuren Schichtmaterial zu versehen. Bei der modulweisen Aufbringung von Schichtmaterialien wie etwa Lederelementen stößt man jedoch derzeit auf Schwierigkeiten. Es ist Aufgabe der vorliegenden Erfindung diese Schwierigkeiten zu beseitigen und eine einfache und günstige Möglichkeit zum abschnittsweisen Aufbringen eines Schichtmaterials auf einen Lenkradrohling bereitzustellen.

Diese Aufgabe wird dadurch gelöst, dass das Schichtmaterial zu Materialstreifen zugeschnitten und an der Innenseite mit einem Kleber beschichtet wird, dass mehrere Materialstreifen zu einem Streifenring vernäht werden, dass der Streifenring auf den Lenkradrohling aufgezogen und in eine Pressform eingelegt wird, dass die Pressform derart geschlossen wird, dass die Ränder der Materialstreifen in die Haltenuten des Lenkradrohlings eingepresst werden und dass nachfolgend der Kleber aktiviert wird.

Der Lenkradrohling kann aus einem mit Kunststoff umschäumten Kern aufgebaut werden und/oder mit einem Kunststoff ummantelt werden, wobei entsprechende Ausnehmungen zur Aufnahme des Schichtmaterials vorgesehen werden. Als ein bevorzugtes Schichtmaterial kommt beispielsweise Leder oder Lederimitat in Frage.

Ein Merkmal der Erfindung ist es, dass der Kleber ein Trockenkleber ist, welcher durch Hitze aktivierbar ist. Dieser Kleber kann in einer möglichen Ausführung der Erfindung auch gleichzeitig mit dem Einpressen des Materialstreifens aktiviert werden.

Durch das Einpressen des Streifenrings wird einerseits das Schichtmaterial sicher auf den Lenkradrohling festgehalten und anschliessend mittels des vorab aufgetragenen Klebers verklebt und auf der anderen Seite entsteht ein glatter Übergang zwischen dem Schichtmaterial und den anderen Lenkradrohlingsabschnitten, welche nicht mit dem Schichtmaterial bezogen wurden. Dieser Übergang ähnelt einer nach innen gerichteten Naht bei einem herkömmlichen Lederlenkrad, was einerseits optisch ansprechend ist und andererseits das Ablösen des Schichtmaterials an den Übergangsstellen während der oft langjährigen Nutzung des Lenkrades verhindert.

Weitere Merkmale der Erfindung sind den Ansprüchen, der Beschreibung sowie den beiliegenden Zeichnungen zu entnehmen.

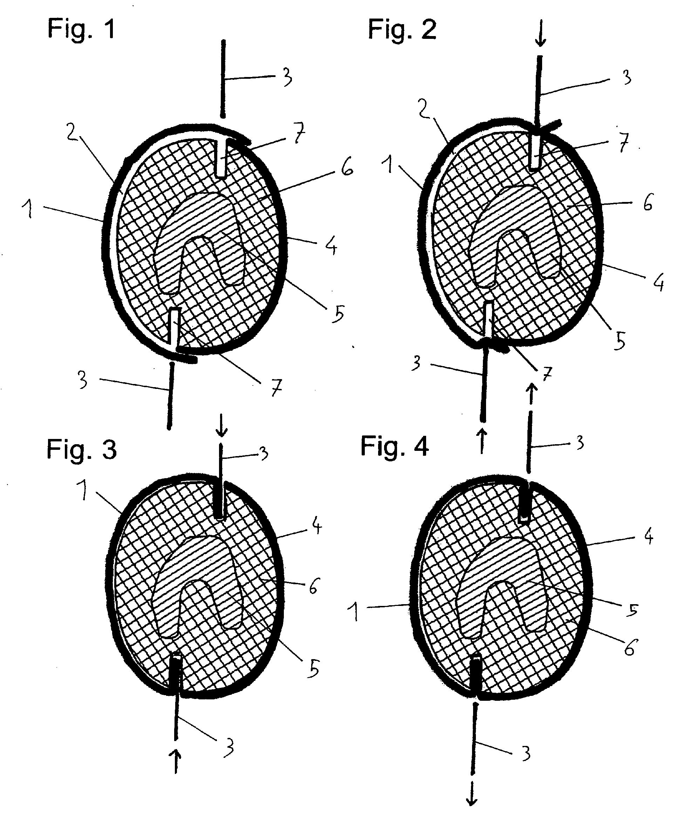

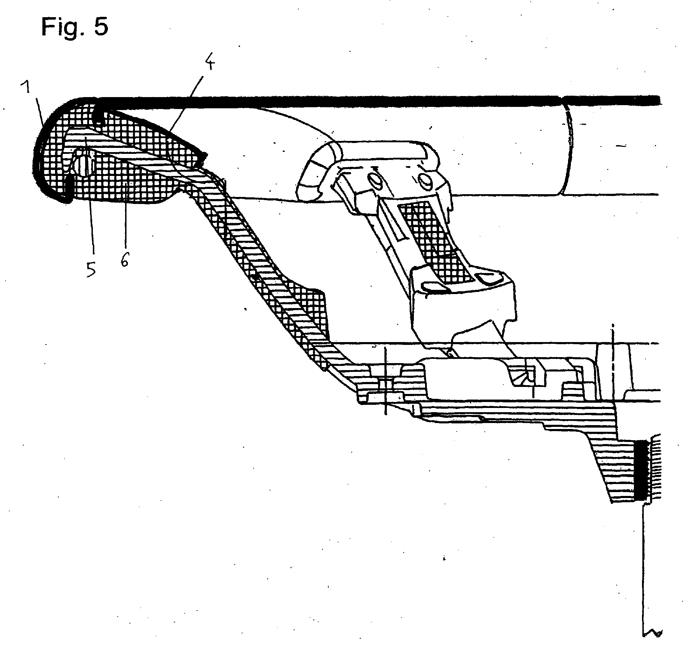

Die Fig. 1 bis 4 zeigen jeweils eine Querschnittsansicht durch ein Lenkrad in den einzelnen Phasen des Pressvorgangs. Fig. 5 ist eine teilweise geschnittene Ansicht eines Lenkradrohlings, welcher abschnittsweise mit einem Schichtmaterial gemäß dem Verfahren der vorliegenden Erfindung versehen wurde.

Der in Fig. 1 gezeigte Querschnitt zeigt einen Lenkradrohling bestehend aus einem Kern 5 sowie einen um diesen Kern geschäumten Kunststoff 6. Auf jenen Oberflächen, die nicht mit einem Schichtmaterial 1 bezogen werden, kann die Kunststoffoberfläche 4 beispielsweise genarbt sein um ebenfalls eine Lederoberfläche zu imitieren.

Das zu einem Streifenring vernähte Schichtmaterial 1 wird mit einem Kleber beschichtet und auf den Lenkradrohling aufgezogen, sodass die Ränder des Schichtmaterials 1 über die Ausnehmungen 7 des Lenkradrohlings hinausragen und der aufgebrachte Kleber in einer Kleberfuge 2 ist. In den Fig. 1 bis 4 nur schematisch dargestellt ist das Kaschierwerkzeug 3, welches sich im Inneren der Pressform befindet und wie im Ablauf von Fig. 1 bis 4 gezeigt, das Schichtmaterial 1 in die Ausnehmungen 7 des Lenkradrohlings einpresst. Anschließend oder gleichzeitig mit dem Einpressen des Materialstreifens kann der Kleber beispielsweise durch Hitzeeinwirkung aktiviert werden und verbindet so das Schichtmaterial 1 fest mit dem Lenkradrohling. An den Übergängen zwischen Kunststoffoberfläche 4 und Schichtmaterial 1 entsteht ein glatter Stoß ähnlich einer nach innen gerichteten Naht bei einem Lederlenkrad.

Fig. 5 zeigt eine teilweise geschnittene Ansicht eines Lenkradrohlings mit einem Kern 5, geschäumten Kunststoff 6 und daran am äußeren Umfang angeordneten Schichtmaterial 1, welches mittels dem erfindungsgemäßen Verfahren aufgebracht wurde.

## Patentansprüche

1. Verfahren zur Herstellung von Lenkrädern für Kraftfahrzeuge, wobei auf die Oberfläche eines Lenkradrohlings zumindest abschnittweise ein Schichtmaterial aufgebracht wird, **dadurch gekennzeichnet,**
- **dass** das Schichtmaterial (1) zu Materialstreifen zugeschnitten und an der Innenseite mit einem Kleber beschichtet wird,
- **dass** mehrere Materialstreifen zu einem Streifenring vernäht werden,
- **dass** der Streifenring auf den Lenkradrohling aufgezogen und in eine Pressform eingelegt wird,
- **dass** die Pressform derart geschlossen wird, dass die Ränder der Materialstreifen in die Ausnehmungen (7) des Lenkradrohlings eingepresst werden und
- **dass** nachfolgend der Kleber aktiviert wird.

2. Verfahren nach Anspruch 1, **dadurch gekennzeichnet, dass** der Lenkradrohling aus einem mit Kunststoff umschäumten Kern (5) aufgebaut wird und/oder mit einem Kunststoff ummantelt wird, wobei entsprechende Ausnehmungen (7) zur Aufnahme des Schichtmaterials (1) vorgesehen werden.

3. Verfahren nach einem der Ansprüche 1 oder 2, **dadurch gekennzeichnet, dass** das Schichtmaterial (1) Leder oder Lederimitat ist.

4. Verfahren nach einem der Ansprüche 1 bis 3, **dadurch gekennzeichnet, dass** der Kleber ein Trockenkleber ist, welcher durch Hitze aktivierbar ist.

5. Verfahren nach einem der Ansprüche 1 bis 4, **dadurch gekennzeichnet, dass** der Kleber gleichzeitig mit dem Einpressen des Materialstreifens aktiviert wird.
